# EUROPEAN PATENT APPLICATION

(11) **EP 2 053 489 A2**
(43) Date of publication of application: **29.04.2009**
(21) Application number: 08018589.5
(22) Date of filing: 23.10.2008
(51) Int. Cl.: G06F 1/32

(54) **Distributed power regulation**

(30) Priority: 23.10.2007 US 982040 P
(71) Applicant: Psion Teklogix Inc., Mississauga, Ontario L5N 7J9 (CA)
(72) Inventor: James, Nic, Milton Ontario L9T 5RT (CA); Bernard, Christopher David, Guelph Ontario N1G 5A5 (CA)
(74) Representative: Manitz, Finsterwald & Partner GbR

(57) **Abstract**

Distributed power regulation in a handheld device is provided. A system for power regulation in a handheld electronic device having a battery, includes: an expansion interface for receiving a battery power from the battery; and a peripheral interface system releasably coupled to the expansion interface and communicating with a peripheral device for generating one or more predetermined operation powers for the peripheral device, based on the battery power provided through the expansion interface.

## Description

### FIELD OF INVENTION

The present invention relates to handheld electronic devices, and more specifically to a method and system for distributed power regulation for a handheld electronic device.

### BACKGROUND OF THE INVENTION

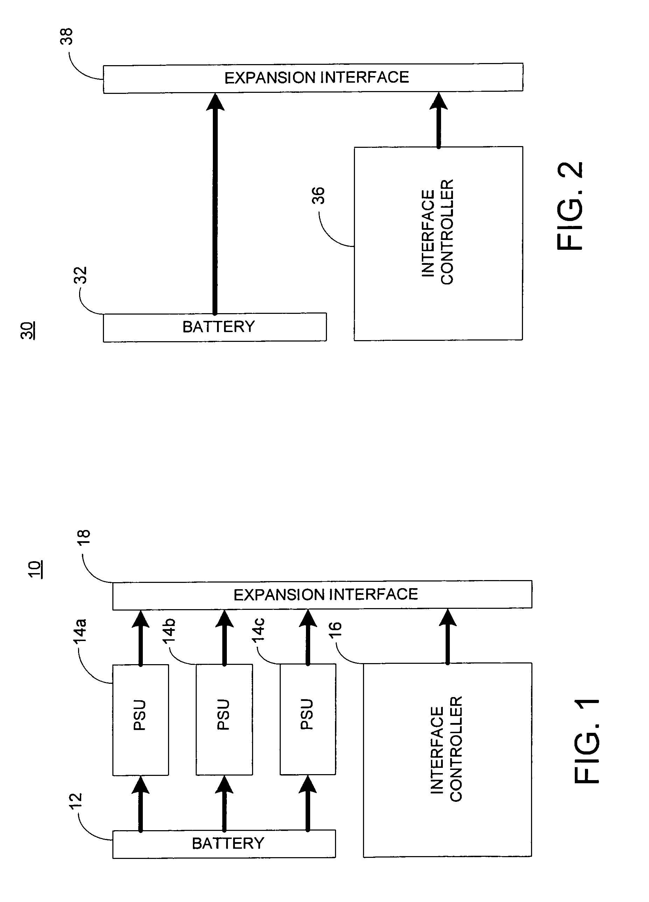

Power management for handheld electronic devices is one of the important design factors. Referring to Figure 1, there is illustrated a power distribution architecture in a conventional handheld electronic device 10. The handheld electronic device 10 includes a battery 12, a plurality of power supply units (PSUs) 14a-14c, an interface controller 16, and an expansion interface 18. The expansion interface 18 has pins that are capable of connecting the handheld electronic device to a peripheral device. In the handheld electronic device 10, a single battery power rail is connected to multiple PSUs 14a-14b. Each of the PSUs 14a-14c converts its input voltage into a fixed voltage (e.g., 1.8V, 3.3V). The voltage from each PSU is supplied to the expansion interface 18 so that the peripheral device plugged into the expansion interface 18 will receive a power from the expansion interface 18.

In the handheld electronic device 10, the source voltage from the battery 12 should be converted into multiple voltages, according to the corresponding voltage requirement. Thus, the amount of current drawn to each pin of the expansion interface 18 is limited. The designer often does not know the voltage or current demands of future peripherals. Thus, it is required to generate larger power more than what is required and use larger connectors and larger pins, in order to meet possible current requirements. This requires more real-estate and cost. In addition, as an available space is limited in the handheld electronic device 10, the type of peripherals plugged into the expansion interface 18 would be limited. The conventional power splitting method lacks flexibility of future expansion, and cannot be manipulated by the peripheral designer.

Therefore, there is a need to control power distribution to peripherals of a handheld electronic device while allowing for maximum flexibility and expandability.

### SUMMARY OF THE INVENTION

It is an object of the invention to provide an improved method and system that obviates or mitigates at least one of the disadvantages of existing systems.

According to an aspect of the present invention there is provided a system for power regulation in a handheld electronic device having a battery. The system includes an expansion interface for receiving a battery power from the battery; and a peripheral interface system releasably coupled to the expansion interface and communicating with a peripheral device for generating one or more predetermined operation powers for the peripheral device, based on the battery power provided through the expansion interface.

### BRIEF DESCRIPTION OF THE DRAWINGS

These and other features of the invention will become more apparent from the following description in which reference is made to the appended drawings wherein:
FIGURE 1 is a block diagram illustrating an expansion system in a conventional handheld electronic device for power distribution system to a peripheral device;
FIGURE 2 is a block diagram illustrating an example of an expansion system in a handheld electronic device for power distribution to a peripheral device, in accordance with an embodiment of the present invention;
FIGURE 3 is a block diagram illustrating the expansion system of Figure 2 and an example of a peripheral expansion unit having a power supply system;
FIGURES 4-5 are diagrams illustrating an example of a peripheral interface connector and associated components of Figure 3;
FIGURE 6 is a side view of an example of a printed circuit board layout associated with components of Figures 4-5; and
FIGURE 7 is another side view of the printed circuit board layout.

### DETAILED DESCRIPTION

Embodiments of the present invention provide a power distribution system for a handheld electronic device, where a power is distributed without splitting a source power from a battery. The handheld electronic device may be, but not limited to, a cellular telephone, a PDA, a combination digital device, a portable rugged or semi-rugged data collection terminal, a handheld two-way radio, a wireless bodywom communication device. In the description, the terms "handheld" and "portable" may be used interchangeably. The system provides a power or current demanded by a peripheral without using multi power supply units.

Referring to Figure 2, there is illustrated an example of an expansion system in a handheld electronic device for power distribution to a peripheral device, in accordance with an embodiment of the present invention. The expansion system 30 of Figure 2 is mounted in a handheld electronic device.

It is well understood by one of ordinary skill in the art that the handheld electronic device having the expansion system 30 may contain components/elements/electronics not illustrated in Figure 2. For example, the handheld electronic device includes a main logic board (or a printed circuit board (PCB)) having a processor and a memory.

The system 30 includes a battery 32, an interface controller 36, and an expansion interface 38. The battery 32 is used to provide operation power to the electronics of the handheld electronic device, and also provide power to peripheral circuitry when it is coupled to the expansion interface 38. The battery power is supplied to the expansion interface 38 through the main logic board.

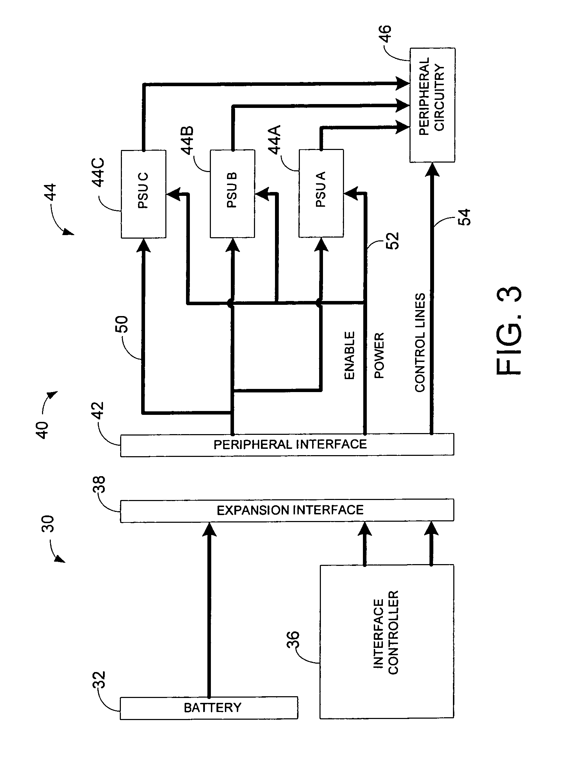

The expansion interface 38 may be a group of wires, a connector or contacts on the PCB. The expansion interface 38 couples a peripheral expansion unit (e.g., 40 of Figure 3) to the main electronics of the handheld electronic device.

The interface controller 36 is a group of digital and/or analog signals used to control and/or communicate with the peripheral or electronic circuits in the handheld electronic devices. The interface controller 36 may include a single controller, multiple controllers, a sub section from a controller or any combinations thereof.

The interface controller 36 may be on a main logic board of the handheld electronic device. Both of the interface controller 36 and the expansion interface 38 may be on the main logic board.

A single power from the battery 32 is directly supplied to the peripheral expansion interface 38 without modifying or splitting the battery power. This single power allows the system 30 to provide greater current options to a peripheral expansion unit (e.g., 40 of Figure 3) where the peripheral expansion unit produces voltage required in the peripheral circuitry (e.g., 46 of Figure 3). Power supply regulation for the peripheral circuitry is employed in the peripheral expansion unit after the connection of the peripheral expansion unit and the expansion interface 38.

The system 30 allows for flexibility of power usage at the peripheral expansion unit, resulting in reducing cost/size of principle terminal while cost/size may be moved to the peripheral expansion unit.

The power distribution may be managed by hardware and/or software based control, which allows for peripheral to sleep or draw power as demanded. This control is designed to maximize battery life.

Figure 3 is a diagram illustrating the expansion system of Figure 2 and an example of a peripheral expansion unit having a power supply system. It is well understood by one of ordinary skill in the art that the configuration of Figure 3 is an example only, and the configuration of the system may vary.

The peripheral expansion unit 40 of Figure 3 includes an peripheral interface 42, a power supply system 44, and peripheral circuitry 46. The peripheral expansion unit 40 is releasably coupled to the expansion interface 38 through the peripheral interface 42. The peripheral interface 42 receives a single power from the expansion interface 38 when it is coupled to the expansion interface 38. The peripheral interface 42 has one or a group of pins for supplying the single power with the maximum current to the power supply system 44.

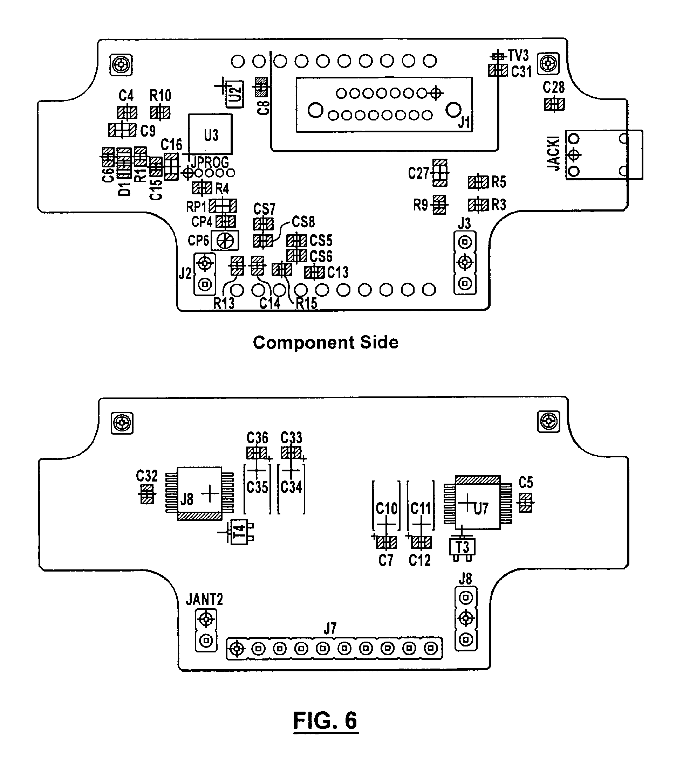

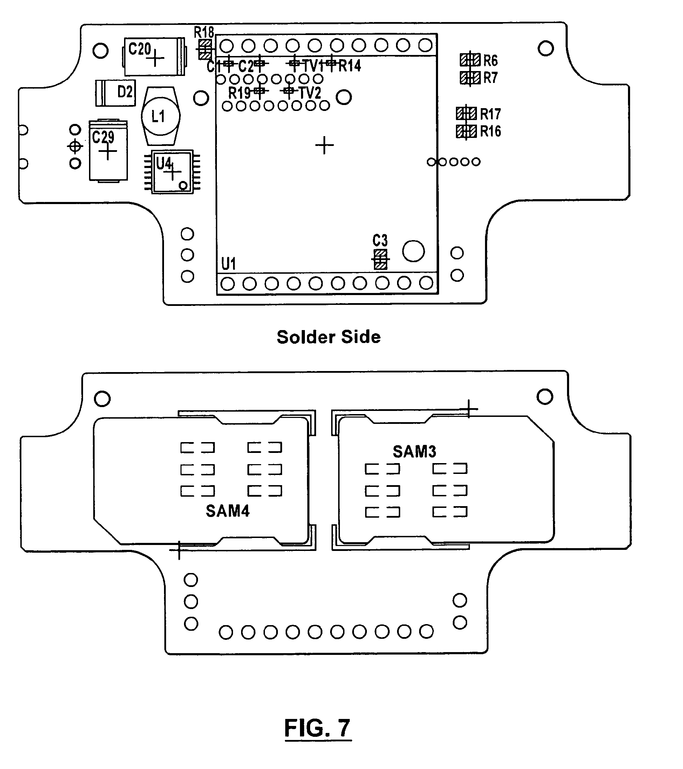

The peripheral interface 42 and the power supply system 44 may be on a printed circuit board (PCB) (e.g., Figures 6-7). The peripheral interface 42, the power supply system 44 and the peripheral circuitry 46 may be on the PCB.

The power supply system 44 includes a plurality of PSUs (e.g., 44A, 44B, 44C), each of which receives a single voltage from the peripheral interface 42, through a power line 50, and converts the voltage into a fixed voltage. In Figure 3, PSUs 44A-44C are illustrated separately, however, they may be integrated into one circuit.

The peripheral interface 42 manages the operation of the PSUs 44A-44C by providing an enable signal 52. The enable signal 52 is provided to each of PSUs 44A-44C, by which the corresponding PSU will operate. The PSUs 44A-44C turn on altogether or in sequence, based on the enable signal 52 from the peripheral interface 42. For example, it is assumed that the PSU 44A is capable of producing 5.5 volts while the PSU 44B is capable of producing 3.3 volts. When the peripheral circuitry 46 requires 3.3volts, the system 40 may enable the PSU 44B and disenable the PSU 44A. In another example, the PSU 44A-44C are enabled to draw the maximum current across all of the power pins of the peripheral interface 42. The peripheral expansion unit 40 can allocate current/voltage to the peripheral circuitry 46 as demanded.

The peripheral interface 54 is coupled with the peripheral circuitry 46 through a communication bus 54. The peripheral interface 42 supports standard protocols, such as Universal Serial Bus (USB), Serial Bus, and Compact Flash (CF). The peripheral interface 42 interfaces with the peripheral circuitry 46 to receive/transmit relevant information/data according to, for example, USB, Serial Bus, and CF formats.

The PSUs 44A-44C are in the peripheral expansion unit 40 and is on the PCB. The designer can designs the PSUs 44A-44C with the peripheral circuitry 46 or use suitable PSUs 44A-44C, based on voltage or current demands from the peripheral device. It is not required to modify the expansion system 30 (e.g., interface controller 36, expansion interface 38) to meet the requirements of voltage and current for the peripheral circuitry 46. Thus, this allows for future expansion of the handheld electronic device's capability, without redesign of the expansion system 30.

The controls through the peripheral interface 42 may include a high level control and a low level control where the high level control includes the power distribution, and the low level control does not depend on the high level control and state independent and control peripheral (sleep/awake).

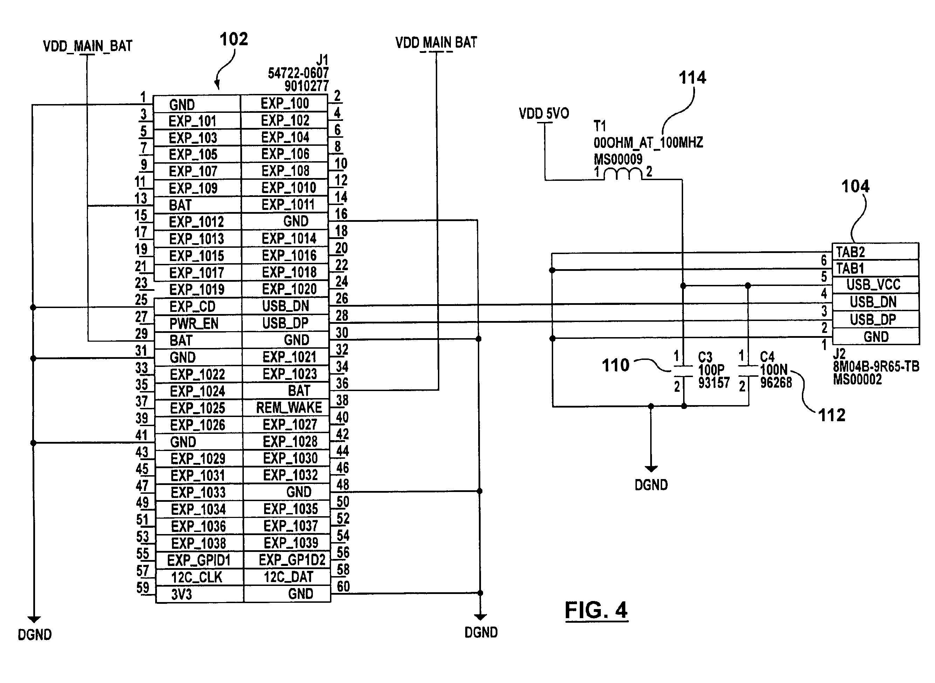

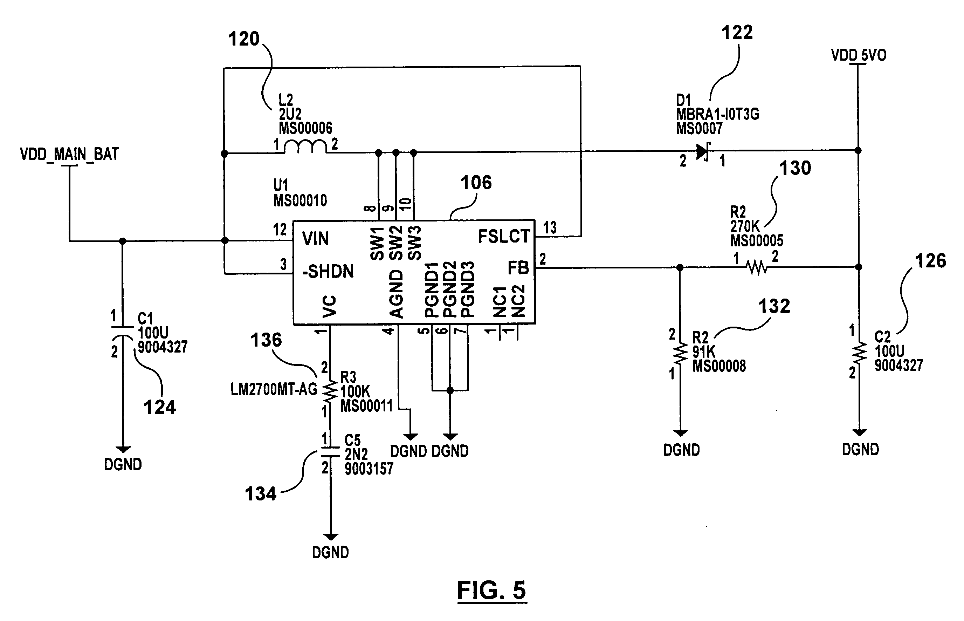

Referring to Figures 4-5, an example of a peripheral interface connector and associated components is described. There are three components in Figures 4-5, connector (J1) 102, module (J2) 104, and a switcher (U1) 106. These components are the peripheral interface connector and the associated components to connect the control line (54 of Figure 3) to the peripheral circuitry (46 of Figure 3). These also allow various USB compatible devices to be connected internally to the expansion interface.

The power and USB signals are connected to a handheld electronic device via the connector 102. The communications signals "USB_DN" and "USB_DP" are standard USB host connection signals from the main logic board of the handheld electronic device. Power is switched on the MLB and supplied via the connector 102 on main power net "VDD_MAIN_BAT".

The main power net "VDD_MAIN_BAT" is connected via a slew rate controlled switch to the battery of the handheld electronic device. The battery voltage can vary from, for example, 3.2V to 4.2V and supply up to, for example, 1.5Amps maximum. The battery voltage is then boosted via a step-up switching power supply to, for example, 5V. The step-up switcher 106 boosts the supply by charging 120 (L2) and catching the released energy via 122 (D1). The capacitor 124 (C1) smoothes the input voltage and component 126 (C2) smoothes the output supply on net "VDD_5V0". Two resistors 130 and 132 (R1 and R2) control the output voltage. Capacitor 134 and resistor 136 (C5 and R3) control the dynamic response of the switcher 106.

The generated supply ("VDD_5V0") and the USB signals ("USB_DN" and "USB_DP") are supplied to the module 104 to allow peripheral connection. The peripheral connection may include a connection to expansion electronics mounted in a separate section, which may contain a thumb print reader. Capacitors 110 and 112 (C3 and C4) and inductor 114 (L1) add further filtering of high frequencies to prevent the circuit from radiating noise in to the adjacent radios.

Figures 6-7 illustrate an example of a printed circuit board layout for an onboard power regulation applicable to Figure 3. Components are laid out on the components side and the solder side of the board, (e.g., J1, J2 and U1 of Figures 4-5).

One or more currently preferred embodiments have been described by way of example. It will be apparent to persons skilled in the art that a number of variations and modifications can be made without departing from the scope of the invention as defined in the claims.

## Claims

1. A system for power regulation in a handheld electronic device having a battery, comprising:
an expansion interface for receiving a battery power from the battery; and
a peripheral interface system releasably coupled to the expansion interface and communicating with a peripheral device for generating one or more predetermined operation powers for the peripheral device, based on the battery power provided through the expansion interface.

2. A system as claimed in claim 1, wherein the peripheral interface system comprises:
a peripheral interface releasably coupled to the expansion interface for communicating with a main logic board of the handheld electronic device.

3. A system as claimed in claim 1, wherein the peripheral interface system comprises:
a plurality of power supply units, each for generating a predetermined operation power.

4. A system as claimed in claim 3, wherein the peripheral interface system comprises:
a peripheral interface releasably coupled to the expansion interface for selectively enabling one or more than one of the plurality of power supply units.

5. A system as claimed in claim 1, wherein the peripheral interface system comprises:
a step-up switcher for generating the predetermined operation power.

6. A system as claimed in claim 2, wherein the peripheral interface regulates at least one of voltage and current required by the peripheral device.

7. A system as claimed in claim 1, wherein the peripheral interface system is employed on a printed circuit board.

8. A system as claimed in claim 1, wherein the expansion interface communicates with a main logic board of the handheld electronic device.

9. A system as claimed in claim 8, wherein the peripheral interface system communicates with the main logic board through the expansion interface.

10. A system as claimed in claim 8, wherein the peripheral interface system communicates with the main logic board through the expansion interface, including signal communications and the battery power.

11. A system as claimed in claim 1, wherein the expansion interface communicates with a main electronic system in the handheld electronic device for controlling the peripheral interface system when the peripheral interface system is coupled to the expansion interface.

12. A system as claimed in claim 1, wherein the peripheral interface system and the peripheral device form an expansion unit releasably connectable to the expansion interface.
